(19) Europäisches Patentamt / European Patent Office / Office européen des brevets

(11) **EP 4 699 981 A1**

(12) **EUROPEAN PATENT APPLICATION**
published in accordance with Art. 153(4) EPC

(43) Date of publication:
**25.02.2026 Bulletin 2026/09**

(21) Application number: **24792335.2**

(22) Date of filing: **08.02.2024**

(51) International Patent Classification (IPC):
**C01B 32/28** (2017.01)    **C09K 11/65** (2006.01)

(52) Cooperative Patent Classification (CPC):
**C01B 32/28; C09K 11/65**

(86) International application number:
**PCT/JP2024/004227**

(87) International publication number:
**WO 2024/219059 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 JP 2023067307**

(71) Applicants:
• **Daicel Corporation**
**Osaka-shi, Osaka 530-0011 (JP)**
• **Kyoto University**
**Kyoto-shi, Kyoto 606-8501 (JP)**

(72) Inventors:
• **NISHIKAWA, Masahiro**
**Tokyo 108-8230 (JP)**

• **LIU, Ming**
**Tokyo 108-8230 (JP)**
• **TSURUI, Akihiko**
**Tokyo 108-8230 (JP)**
• **MIZUOCHI, Norikazu**
**Kyoto-shi, Kyoto 606-8501 (JP)**
• **FUJIWARA, Masanori**
**Kyoto-shi, Kyoto 606-8501 (JP)**
• **SO, Tzekit**
**Kyoto-shi, Kyoto 606-8501 (JP)**
• **OHKI, Izuru**
**Kyoto-shi, Kyoto 606-8501 (JP)**

(74) Representative: **Grünecker Patent- und Rechtsanwälte**
**PartG mbB**
**Leopoldstraße 4**
**80802 München (DE)**

(54) **NV CENTER-CONTAINING NANODIAMOND PARTICLE AND METHOD FOR PRODUCING SAME**

(57)    A nanodiamond particle emitting a fluorescence emission peak attributed to a nitrogen-vacancy (NV) center, and satisfying conditions (i) and (ii), (i) and (iii), or (i), (ii), and (iii) described below: (i) when a 1 mass% aqueous suspension of the particle is applied onto a glass substrate, the proportion of the number of bright spots exhibiting an ODMR contrast of 7% or more among bright spots in which the ODMR of the NV center is observed is 10% or more, (ii) the ODMR contrast is 0.12 or more, and (iii) the maximum contrast in the Rabi oscillation is 25% or more.

Fig. 6

EP 4 699 981 A1

## Description

Technical Field

The present invention relates to a nanodiamond particle having an NV center and a method for producing the same.

Background Art

Fluorescent nanodiamonds have been attracting attention as fluorescent probes in biosensing, bioimaging, and other measurements of microenvironments and the like, and among them, optically detected magnetic resonance (ODMR) by NV centers, particularly by NV⁻ center-containing nanodiamonds has been attracting attention. The ODMR activity of NV⁻ center-containing nanodiamond particles has been reported, but the intensity thereof is not sufficient (Patent Document 1). In addition, there has been no nanodiamond having a color center derived from a heteroatom such as SiV Although there is a nanodiamond also having a different nitrogen defect such as NVN, it has been produced by performing an annealing operation under special conditions.

Non-Patent Document 1 describes subjecting nanodiamond particles obtained by a detonation method to gas phase oxidation at 425°C for 5 hours, and then to mixed acid treatment at 130°C for 3 days, but the ODMR intensity is insufficient due to the low gas phase oxidation temperature.

Citation List

Patent Document

Patent Document 1: JP 6117812 B

Non-Patent Literature

Non-Patent Document 1: Nanoscale Adv. 2022, 4, 2268 - 2277

Summary of Invention

Technical Problem

An object of the present invention is to provide a NV center-containing nanodiamond with an excellent ODMR contrast.

Solution to Problem

The present invention provides the following nanodiamond particle and a method for producing the same.

[1] A nanodiamond particle emitting a fluorescence emission peak attributed to a nitrogen-vacancy (NV) center, the nanodiamond particle satisfying condition (i) described below:

(i) when a 1 mass% aqueous suspension of the particle is applied onto a glass substrate, a proportion of the number of bright spots exhibiting an ODMR contrast of 7% or more among bright spots in which ODMR of the NV center is observed is 10% or more.

[2] The nanodiamond particle according to [1], further satisfying condition (ii) and/or condition (iii) described below:

(ii) an ODMR contrast is 12% or more;
(iii) a maximum contrast in Rabi oscillation is 25% or more.

[3] The fluorescent nanodiamond particle according to [1] or [2], further including a heteroatom-V center.

[4] A method for producing the fluorescent nanodiamond described in any one of [1] to [3], the method including subjecting a nanodiamond raw material obtained by detonation to gas phase oxidation at a temperature of 560 to 620°C, and further to a high-temperature long-time mixed acid treatment at a temperature of 120 to 340°C for 36 to 120 hours.

[5] The method for producing the fluorescent nanodiamond according to [4], wherein a post-treatment is not performed.

Advantageous Effects of Invention

According to the present invention, it is possible to provide nanodiamond particles (ND) having an NV center with excellent ODMR contrast, and capable of performing sensing with high accuracy / high sensitivity, which optically detects changes in a microenvironment including temperature via magnetic resonance.

Since the ND of the present invention has an NV center with excellent ODMR contrast, a sufficient signal can be obtained even when the ND is a nano-sized small particle and the number of NV$^-$ in each ND is small. For example, when the ND of the present invention is used, the ND can be introduced into a living body non-invasively because of its small diameter, and a sufficient signal can be obtained, so that the ND serves as an excellent probe for visualizing a vital phenomenon in a cell.

Brief Description of Drawings

[FIG. 1] Configuration diagram of confocal microscope apparatus.

[FIG. 2] Example of bright spot mapping of nanodiamond particles obtained in Example 1 (undoped).

[FIG. 3] Measurement results of fluorescence spectrum at typical bright spots in fluorescence mapping of nanodiamond particles (undoped) obtained in Example 1.

[FIG. 4] Measurement results of the fluorescence spectrum at a typical bright spot in the fluorescence mapping of the nanodiamond particles (Si-doped) obtained in Example 2. MW: microwave

[FIG. 5] Rabi oscillation measurement sequence. S:Signal. R:Reference.

[FIG. 6] ODMR measurement results at typical bright spots in fluorescence mapping of nanodiamond particles (undoped) obtained in Example 1.

[FIG. 7] ODMR measurement results at typical bright spots in fluorescence mapping of nanodiamond particles (Si doped) obtained in Example 2.

[FIG. 8] Rabi oscillation measurement results at typical bright spots in fluorescence mapping of nanodiamond particles ((a) Si-doped, (b) undoped) obtained in Example 1 or 2.

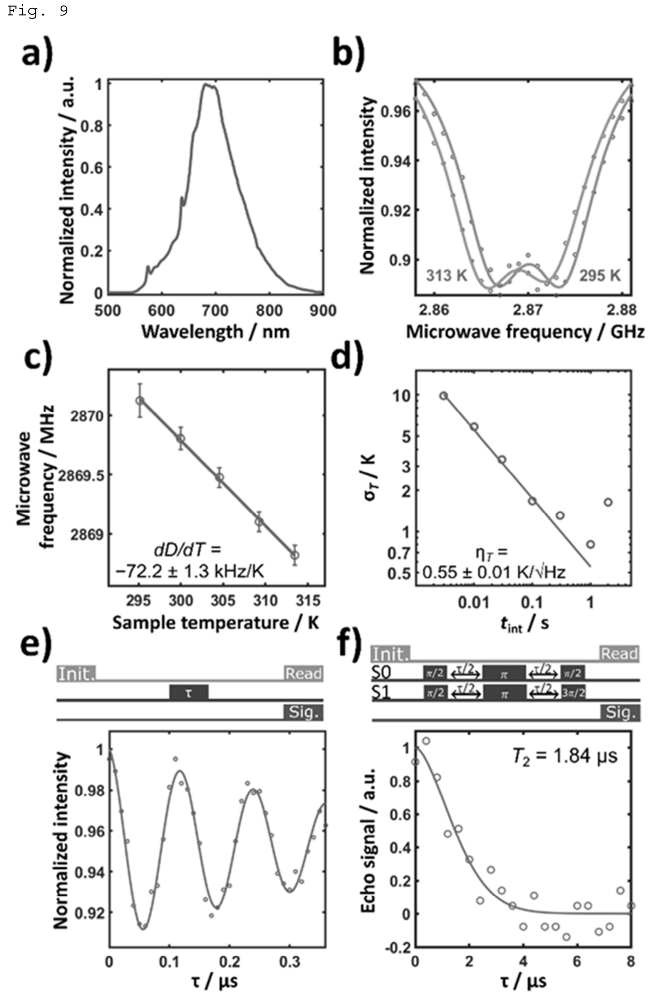

[FIG. 9] Temperature sensitivity and $T_2$ measurements for NV centers in representative Si-DND. All measurements shown in this figure were performed on the same bright spot (Si-DND aggregate) in the confocal image. Figures a) to d) were measured in zero magnetic field (no external magnetic field applied), and e) and f) were measured with a static magnetic field applied. a) Emission spectrum of a bright spot. b) ODMR spectra measured at sample temperatures of T = 295 K (blue) and T = 313 K (red). The spectra of the blue and red lines were each fitted with a double Lorentzian function and the fitting results were shown. C) Temperature dependence of the zero magnetic field splitting constant D. The average value of the fitting results of two peaks is shown. The rate of change in D with respect to the sample temperature T (dD / dT) was determined from linear approximation (red line) of the D values determined by fitting. Error bars were determined from the standard error of fitting with the double Lorentzian function. D) Temperature uncertainty (standard deviation of the sample temperature) $\sigma_T$ at the integration time ($t_{int}$) measured at room temperature (T = 295 K). The red line indicates the results of fitting using the following formula.

[Formula 1]

$$\sigma_T = \eta / \sqrt{t_{int}}$$

The temperature sensitivity $\eta$ corresponds to $\sigma_T$ at the unit integration time $t_{int}$ = 1s, and from the fitting results, $\eta$ was obtained.

[Formula 2]

$$\eta = 0.55 \pm 0.04 \, \mathrm{K}/\sqrt{\mathrm{Hz}}$$

e) Rabi oscillation measurement results when a static magnetic field is applied (ms = 0 ↔ ms = - 1). The upper diagram shows the pulse sequence in the Rabi oscillation measurement (laser, microwave, luminescence detection from the top).

f) Hahn echo measurement results ($T_2$). The measurement result was fitted using the following formula,

[Formula 3]

$$\exp(-(\tau/T_2)^n)$$

and $T_2$ was determined to be 1.84 $\mu$s.

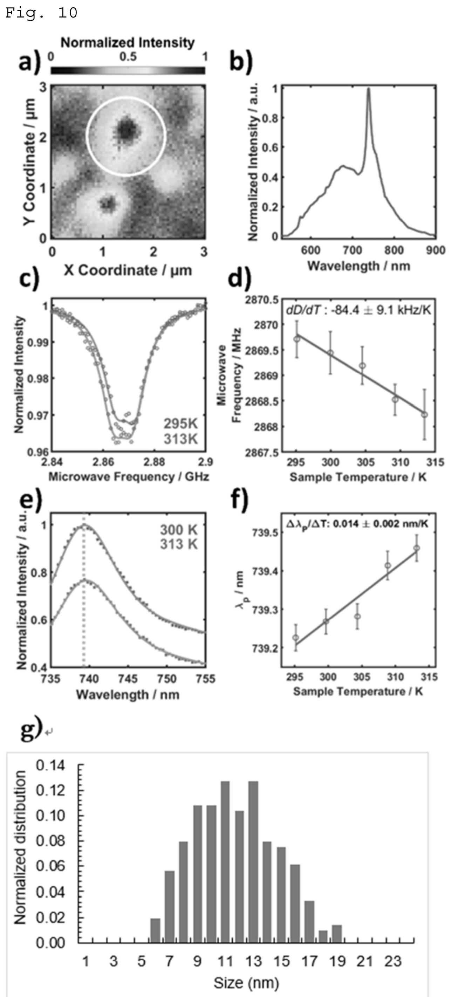

[FIG. 10] Temperature sensing by NV$^-$ and SiV$^-$ centers.

a) Confocal images of Si-DND aggregates. Bright spots where both NV$^-$ and SiV$^-$ were observed are circled. b) Fluorescence spectrum of the bright spot shown in a). The zero phonon line of NV$^-$ (ZPL, 637 nm) and the ZPL of SiV$^-$ (737 nm) can be seen. c) ODMR spectra of NV$^-$ measured at two temperature levels, 295 K and 313 K. d) Sample temperature dependence of the zero magnetic field splitting constant D of NV$^-$. D varied linearly with temperature T, resulting in dD / dT = - 84.4 $\pm$ 9.1 kHz/K. e) Emission spectra of SiV$^-$ measured at temperatures of 300 K and 313 K. f) Temperature dependence of the peak wavelength of the ZPL of SiV$^-$. The peak wavelength $\lambda_p$ changed linearly with respect to temperature, resulting in $\Delta\lambda_p$ / $\Delta$T = 0.014 $\pm$ 0.002 nm/K. g) Graph of the size distribution of Si-DND.

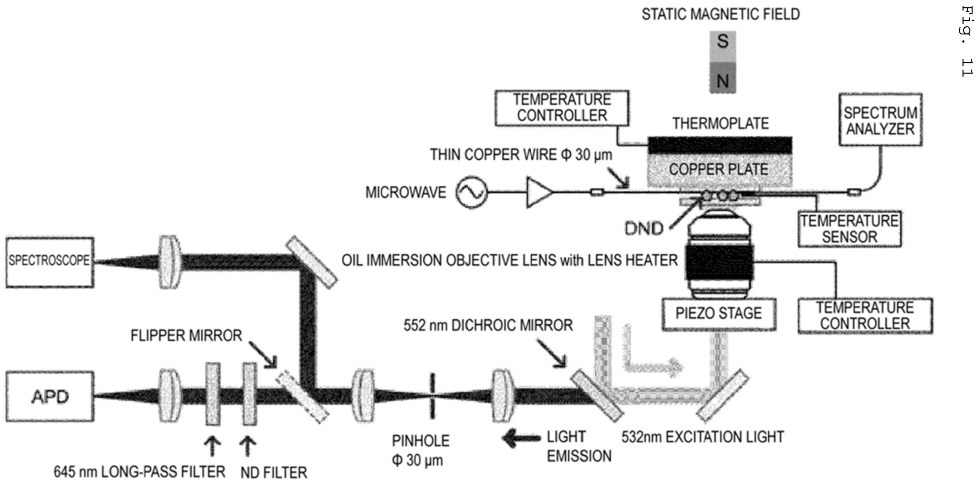

[FIG. 11] A diagram of an apparatus for temperature sensing of Si-DND.

Description of Embodiments

The nanodiamond particles according to an embodiment of the present invention satisfy the following condition (i) as an essential condition, and preferably further satisfy the condition (ii) and/or (iii):

(i) When a 1 mass% aqueous suspension of the particles is applied onto a glass substrate, the proportion of the number of bright spots exhibiting an ODMR contrast of 7% or more among bright spots in which the ODMR of the NV center is observed is 10% or more.
(ii) ODMR contrast is 12% or more.
(iii) The contrast in the Rabi oscillation is 25% or more as the maximum value.

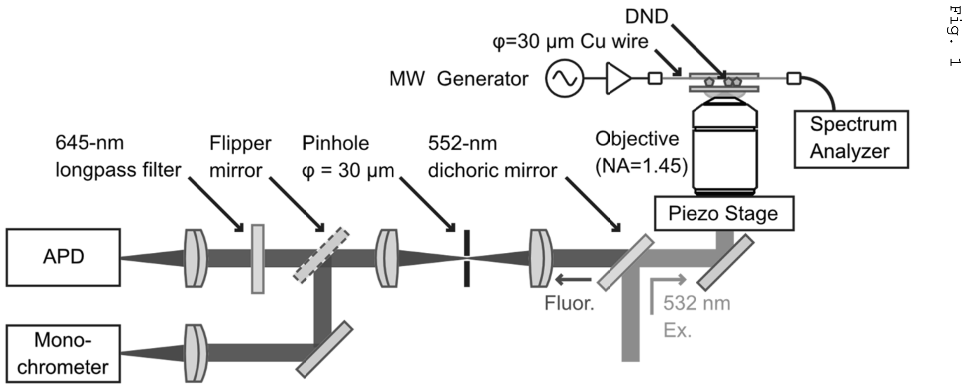

The number of bright spots and the ODMR contrast can be measured using, for example, a confocal microscope apparatus having a configuration illustrated in FIG. 1. The glass substrate coated with the aqueous suspension of nanodiamond particles is placed on an objective lens, and mapping by fluorescence intensity (detection of emission on the longer wavelength side than 645 nm) is performed on 100 $\times$ 100 points in a sample range suitable for ODMR measurement, such as excitation light of 532 nm, 100 $\mu$m $\times$ 100 $\mu$m, and 30 $\mu$m $\times$ 30 $\mu$m, to determine the number of bright spots. For each bright spot to be observed, a microwave is swept in a range of $\pm$ 50 MHz around a resonance frequency (2870 MHz) in a static magnetic field of the NV$^-$ center through a thin copper wire installed on a glass substrate in advance, and a change in fluorescence intensity (photon count number) is detected. The rate of change (rate of decrease) in the fluorescence intensity at the resonance frequency relative to the fluorescence intensity at a frequency away from the resonance frequency is referred to as ODMR contrast, and when the fluorescence intensity is plotted against the frequency to be swept, a negative peak is given at the resonance frequency. This peak may be split due to distortion or the like of the nanodiamond crystal. With respect to the ODMR contrast obtained in this manner, the proportion of the number of bright spots exhibiting an ODMR contrast of 7% or more among the bright spots in which the ODMR of the NV center is observed is preferably 10% or more, more preferably 15% or more, still more preferably 20% or more, particularly preferably 30% or more, and most preferably 40% or more. In addition, the proportion of the number of bright spots exhibiting an ODMR contrast of 8% or more among the bright spots in which the ODMR of the NV center is observed is preferably 5% or more, more preferably 10% or more, still more preferably 15% or more, particularly preferably 20% or more, and most preferably 30% or more. In addition, the proportion of the number of bright spots exhibiting an ODMR contrast of 10% or more among the bright spots in which the ODMR of the NV center is observed is preferably 2% or more, more preferably 5% or more, still more preferably 10% or more, and particularly preferably 15% or more. Furthermore, the proportion of the number of bright spots exhibiting an ODMR contrast of 12% or more among the bright spots in which the ODMR of the NV center is observed is preferably 1% or more, more preferably 2% or more, still more preferably 3% or more, and particularly preferably 5% or more. The bright spot mapping is preferably performed in a wavelength range that avoids the peak wavelength of Raman scattering of the nanodiamond, but is not particularly limited thereto as long as the fluorescence attributed to the NV center is detected. The excitation wavelength is not particularly limited as long as the NV center is excited.

The contrast in the Rabi oscillation can be measured by pulsing a laser and a microwave (resonance frequency in ODMR) and operating opening and closing of an observation channel (photon count) according to a measurement sequence using the confocal microscope apparatus. By controlling the spin state of the NV center by pulsed laser and microwave, the contrast can be measured more accurately. The contrast in the Rabi oscillation as the maximum value is preferably 25% or more, more preferably 26% or more, still more preferably 27% or more, particularly preferably 28% or more, and most preferably 29% or more. In addition, in a plurality of bright spots in which ODMR is observed, which are arbitrarily selected, the average of the contrast in the Rabi oscillation is preferably 15% or more, more preferably 16% or more, still more preferably 17% or more, particularly preferably 18% or more, particularly preferably 19% or more, or 20% or more.

When the nanodiamond particles have a heteroatom-V center in which the heteroatom is other than nitrogen, the ZPL may be further performed in a wavelength range including the ZPL of the heteroatom-V centers. Since the wavelength of ZPL (wavelength of peak top) may vary depending on the structure of the fluorescent center, the number of bright spots emitting fluorescence of ZPL peak in the range of "ZPL $\pm$ Xnm ($0 \leq X \leq 5$)" is measured, and the proportion thereof is calculated. For example, in the case of SiV, both the case where the ZPL is 738nm ($\pm$ 0nm) and the case where the ZPL is slightly deviated from 738nm are conceivable, but even when the ZPL is slightly deviated, it is not conceivable that the ZPL is deviated from the known ZPL (738nm) by more than 5nm, and thus the ZPL falls within the range of ZPL $\pm$ Xnm ($0 \leq X \leq 5$).

The average size of the primary particles of the nanodiamond particles according to an embodiment of the present invention is preferably from 2 to 70 nm, more preferably from 2.5 to 60 nm, even more preferably from 3 to 55 nm, particularly preferably from 3.5 to 50 nm, and most preferably from 5 to 50 nm. The average size of the primary particles can be determined by Scherrer's formula based on the analysis results of powder X-ray diffractometry (XRD). Examples of the measurement instrument of XRD include the Multipurpose X-ray Diffraction System with Built-in Intelligent Guidance (available from Rigaku Corporation).

The peak area ratio of $sp^2$-carbon to $sp^3$-carbon ($sp^2$-carbon/$sp^3$-carbon) of the nanodiamond particles according to an embodiment of the present invention obtained with the Raman spectroscopy is preferably from 0.01 to 7 or from 0.05 to 3, more preferably from 0.1 to 1.2 or 0.1 to 1, even more preferably from 0.1 to 0.5 and particularly preferably from 0.1 to 0.3. The oxidation treatment of the present invention can reduce the proportion of $sp^2$-carbons and increase the fluorescence intensity.

The peak area ratio of $sp^2$-carbon to $sp^3$-carbon ($sp^2$-carbon/$sp^3$-carbon) can be determined by microscopic Raman spectroscopy using, for example, a 325nm laser and a microscopic Raman spectrometer. The peak area of $sp^2$-carbon refers to the total area of two peaks that appear near 1250 $cm^{-1}$ and 1328 $cm^{-1}$, and the peak area of $sp^3$-carbon refers to the total area of two peaks that appear near 1500 $cm^{-1}$ and 1590 $cm^{-1}$. Examples of the microscopic Raman spectrometer that can be used include the LabRAM HR Evolution microscopic laser Raman spectrophotometer (available from Horiba, Ltd.).

When the nanodiamond particles according to an embodiment of the present invention are dispersed in water at a concentration of 3 wt%, the pH is preferably from 1 to 12.

The shape of the nanodiamond particles according to an embodiment of the present invention is not limited, but is preferably, for example, spherical, ellipsoidal, or polyhedral.

The BET specific surface area of the nanodiamond particles according to an embodiment of the present invention is preferably from 20 to 900 $m^2$/g, from 25 to 800 $m^2$/g, from 30 to 700 $m^2$/g, from 35 to 600 $m^2$/g, from 50 to 500 $m^2$/g, or from 100 to 400 $m^2$/g, and more preferably from 150 to 250 $m^2$/g. The BET specific surface area can be measured by nitrogen adsorption. Examples of a measurement instrument for the BET specific surface area include BELSORP-mini II (available from Microtrac BEL Corporation). The BET specific surface area can be measured under the following conditions, for example.

- Measured powder amount: 40 mg
- Preliminary drying: treated at 120°C for 3 hours in a vacuum.
- Measurement temperature: -196°C (liquid nitrogen temperature)

When the nanodiamond according to an embodiment of the present invention contains a doped heteroatom other than nitrogen, the heteroatom content is preferably from 0.0001 to 10.0 mass%, more preferably from 0.0001 to 5.0 mass%, and even more preferably from 0.0001 to 1.0 mass%. The heteroatom content can be measured by, for example, inductively-coupled plasma emission spectrometry (ICP-AES), XRF, secondary ion mass spectrometry (SIMS). When the heteroatom is a Group 14 element such as Si, Ge, Sn, or Pb, the heteroatom content in the nanodiamond can be quantified as an acidic solution after alkali fusion. The doped heteroatom preferably forms a heteroatom-V center, and the heteroatom-V center preferably has ZPL.

The concentration of the heteroatom-V center in the nanodiamond particles according to an embodiment of the present invention is preferably $1 \times 10^{10}$ /$cm^3$ or greater, and more preferably from $2 \times 10^{10}$ to $1 \times 10^{19}$ /$cm^3$. The concentrations of the heteroatom-V center can be determined by using, for example, a confocal laser microscope or a fluorescence and absorbance spectrometer. Note that, for determination of the concentration of heteroatom-V center by fluorescence and absorbance spectrometry, Literature (DOI 10.1002/pssa.201532174) can be used as a reference.

In this specification, the heteroatom is selected from the group consisting of B, P, Si, S, Cr, Sn, Al, Ge, Li, Na, K, Cs, Mg, Ca, Sr, Ba, Ti, Zr, V, Nb, Ta, Mo, W, Mn, Fe, Ni, Cu, Ag, Zn, Cd, Hg, Ga, In, Tl, Pb, As, Sb, Bi, Se, Te, Co, Xe, F, Y, and lanthanoids, preferably selected from the group consisting of Si, Ge, Sn, B, P, Ni, Ti, Co, Xe, Cr, W, Ta, Zr, Zn, Ag, Pb, and lanthanoids, and further preferably selected from the group consisting of Si, Ge, Sn, B, P, Ni, Ti, Co, Xe, Cr, W, Ta, Zr, Zn, Ag, and Pb.

The preferred heteroatom to be used for doping of nanodiamonds is a Group 14 element selected from the group consisting of Si, Ge, Sn, and Pb, B (boron), P (phosphorus), and Ni, and a more preferred heteroatom is Si, Ge, Sn, B, and P.

In one preferred embodiment, the nanodiamond particles obtained by the production method according to an embodiment of the present invention contain at least one element selected from the group consisting of Group 14 element selected from the group consisting of Si, Ge, Sn, and Pb; B, P, and Ni; and at least one other heteroatoms.

In other preferred embodiments, the nanodiamond particles obtained by the production method according to an embodiment of the present invention contain at least one element selected from the group consisting of Si, B, P, and Ni, and at least one other heteroatoms. The number of heteroatoms with which the nanodiamond particles obtained by the production method according to an embodiment of the present invention is doped is preferably from 1 to 5 types, more preferably from 1 to 4 types, and even more preferably 1 type, 2 types, or 3 types.

The nanodiamond raw material used in the production method according to an embodiment of the present invention can be produced by a detonation method including mixing of an explosive composition containing at least one type of explosive and at least one type of heteroatom compound and exploding the obtained mixture in a sealed container. As the nitrogen atom of the NV center, a nitrogen atom derived from a nitro group of the explosive can be used, but a nitrogen atom obtained by mixing another nitrogen compound with the explosive may be used. Examples of the container include metal containers such as SUS, and synthetic resin containers. When a metal container such as SUS is used as the container, metals such as Fe, Ni, and Cr originated from the container may be mixed in the nanodiamond particles, but these metals can be removed by a high-temperature long-time mixed acid treatment at 130°C for 3 days, for example. The explosive and the heteroatom compound are preferably formed by pressing or casting. Examples of the method of producing particles (dry powder) of the explosive and the heteroatom compound include crystallization, crushing, and spray flash evaporation.

The nanodiamond raw material can be subjected to a gas phase oxidation treatment and a high-temperature long-time mixed acid treatment to improve the ODMR contrast.

In the gas phase oxidation treatment, the temperature is important, and if the temperature is less than 560°C, the fluorescence intensity cannot be increased by reducing the proportion of $sp^2$-carbons. The upper temperature limit of the oxidation treatment is 650°C. The most preferable temperature for the gas phase oxidation treatment is 570 to 610°C. The oxygen concentration in the atmosphere in the gas phase oxidation treatment is preferably 1 to 100 v/v%, 1 to 50 v/v%, or 1 to 25 v/v%, more preferably 1 to 10 v/v%. The time of the gas phase oxidation treatment depends on the oxygen concentration of the atmosphere, but is preferably 0.5 to 20 hours, 0.5 to 10 hours, or 1 to 5 hours, and more preferably 1 to 3 hours.

In the high-temperature long-time mixed acid treatment, both the temperature and the time are important, and when the temperature is lower than 100°C or the time is shorter than 24 hours, the fluorescence intensity cannot be increased by reducing the proportion of $sp^2$-carbons. The upper temperature limit of the high-temperature long-time mixed acid treatment is 340°C, and the upper time limit of the high-temperature long-time mixed acid treatment is 200 hours. The most preferable temperature for the high-temperature long-time mixed acid treatment is 120 to 200°C, and the most preferable time for the high-temperature long-time mixed acid treatment is 60 to 120 hours. The mixed acid is composed of nitric acid and sulfuric acid, and the ratio of nitric acid to sulfuric acid (volume ratio) is 1:4 to 2:1.

Note that a normal mixed acid treatment can be performed before the gas phase oxidation treatment. The temperature for the normal mixed acid treatment is from 50 to 200°C, and the duration of the normal mixed acid treatment is from 0.5 to 24 hours. The mixed acid used in the normal mixed acid treatment is composed of nitric acid and sulfuric acid, and the ratio of nitric acid to sulfuric acid (volume ratio) is 1:3 to 1:1.

The nanodiamond particles obtained by the production method according to an embodiment of the present invention preferably emit a fluorescence emission peak resulting from the NV center. The wavelengths of the fluorescence emission peaks of the NV centers are 550 to 800 nm, and the peaks have a peak apex near 700 nm. In the case where ZPL can be observed, ZPL is observed at around 575 nm and 637 nm, but a clear peak is not observed in some cases. When the nanodiamond particles further contain a heteroatom-V center, the fluorescence emission peak resulting from the SiV center is preferably from 720 nm to 770 nm, more preferably from 730 nm to 760 nm for example, when the heteroatom is silicon; the fluorescence emission peak resulting from the GeV center is preferably from 580 nm to 630 nm, more preferably from 590 nm to 620 nm when the heteroatom is germanium; the fluorescence emission peak resulting from the SnV center is preferably from 590 nm to 650 nm, more preferably from 600 nm to 640 nm when the heteroatom is tin; and the fluorescence emission peak resulting from the PbV center is preferably from 540 nm to 600 nm, more preferably from 550 nm to 590 nm when the heteroatom is lead.

In one preferred embodiment of the present invention, the nanodiamond particles obtained by the production method according to an embodiment of the present invention, which emit fluorescence from a heteroatom-vacancy center in which the heteroatom is other than phosphorus or boron, may further be doped with phosphorus and/or boron. It is considered that the introduction of these atoms (B and/or P) has an effect of adjusting the charge of a heteroatom-V center in which the heteroatom is other than B and/or P, or a defect (color center) derived from other doped heteroatoms to stabilize fluorescence. Further, the NV centers of the nanodiamond obtained by the production method according to an embodiment of the present invention and the nanodiamond particles according to an embodiment of the present invention are color centers formed by nitrogen and vacancies, and have a broad fluorescence spectrum having a peak at or around 575 nm and/or 637 nm due to zero phonon lines (ZPL), and, for example, exhibit a broad fluorescence spectrum in a range of approximately 550 nm to 800 nm when excited at 532 nm. For example, use of a heteroatom that is not directly related to fluorescence of phosphorus, boron, or the like is preferable for doping because the NV center intensity may be increased.

In one more preferred embodiment of the present invention, the fluorescence emission peak of the Si-doped nanodiamond particles has a sharp peak of approximately 738 nm, which is called zero phonon line (ZPL). The Ge-V center has a ZPL at approximately 602 nm, the Sn-V center has a ZPL at approximately 620 nm, and the Pb-V center has a ZPL at approximately 552 nm.

The concentration of at least one type of the heteroatom-V center in the nanodiamond particles obtained by the production method according to an embodiment of the present invention is preferably $1 \times 10^{10}/cm^3$ or greater, and more preferably from $2 \times 10^{10}$ to $1 \times 10^{19}/cm^3$. The concentration of the heteroatom-V center refers to the total concentration when the nanodiamond contains two or more NV centers and/or heteroatom-V centers. The concentrations of the NV center and/or heteroatom-V center can be determined by using, for example, a confocal laser microscope or a fluorescence and absorbance spectrometer. Note that, for determination of the concentrations of NV center and heteroatom-V center by fluorescence and absorbance spectrometry, Literature (DOI 10.1002/pssa.201532174) can be used as a reference.

The heteroatom compound is a compound containing at least one type of heteroatom (an atom other than carbon) and may be an organic compound or an inorganic compound.

The carbon content of the nanodiamond particles obtained by the production method according to an embodiment of the present invention is preferably from 70 to 99 mass%, more preferably from 75 to 98 mass%, and even more preferably from 80 to 97 mass%.

The hydrogen content of the nanodiamond particles obtained by the production method according to an embodiment of the present invention is preferably from 0.1 to 5 mass%, more preferably from 0.2 to 4.5 mass%, and even more preferably from 0.3 to 4.0 mass%.

The nitrogen content of the nanodiamond particles obtained by the production method according to an embodiment of the present invention is preferably from 0.1 to 5 mass%, more preferably from 0.2 to 4.5 mass%, and even more preferably from 0.3 to 4.0 mass%.

The contents of carbon, hydrogen, and nitrogen of the nanodiamond obtained by the production method according to an embodiment of the present invention can be measured by elementary analysis.

When the nanodiamond obtained by the production method according to an embodiment of the present invention contains heteroatom, the heteroatom content is preferably from 0.0001 to 10.0 mass%, more preferably from 0.0001 to 5.0 mass%, and even more preferably from 0.0001 to 1.0 mass%. The heteroatom content can be measured by, for example, inductively-coupled plasma emission spectrometry (**ICP**-AES, XRF, secondary ion mass spectrometry (SIMS)), and after alkali fusion, the nanodiamonds can be quantified as an acidic solution. Furthermore, when the nanodiamond contains two or more heteroatoms, the heteroatom content is a total content thereof.

For the nanodiamond particles according to one preferred embodiment obtained by the production method according to an embodiment of the present invention, characteristic peaks of diamond, graphite, surface hydroxy groups (OH), and surface carbonyl groups (CO) can be identified in a chart of Raman shift by Raman spectroscopy. The characteristic peak of diamond in a Raman shift chart is at 1100 to 1400 cm$^{-1}$, the characteristic peak of graphite is at 1450 to 1700 cm$^{-1}$, the characteristic peak of surface hydroxy groups (OH) is at 1500 to 1750 cm$^{-1}$, and the characteristic peak of surface carbonyl groups (CO) is at 1650 to 1800 cm$^{-1}$. The areas of characteristic peaks of diamond, graphite, a surface hydroxy group (OH), and a surface carbonyl group (CO) can be determined by Raman spectrometer. The laser wavelength of the Raman light source is, for example, 325 nm or 488 nm. Examples of the Raman spectrometer include a confocal microscopic Raman spectrometer (for example, a product name: the LabRAM HR Evolution microscopic laser Raman spectrophotometer, available from Horiba, Ltd.) can be used.

In the nanodiamond particles of a preferred one embodiment obtained by the production method according to an embodiment of the present invention, the ratio (D/G) of the peak area (D) of diamond to the peak area (G) of graphite is preferably from 0.2 to 9, more preferably from 0.3 to 8, and even more preferably from 0.5 to 7.

In the nanodiamond particles of a preferred one embodiment obtained by the production method according to an embodiment of the present invention, the ratio (H/D) of the peak area (H) of a surface hydroxy group (OH) to the peak area (D) of diamond is preferably from 0.1 to 5, more preferably from 0.1 to 4.0, and even more preferably from 0.1 to 3.0.

In the nanodiamond particles of a preferred one embodiment obtained by the production method according to an embodiment of the present invention, the ratio (C/D) of the peak area (C) of surface carbonyl group (CO) to the peak area (D) of diamond is preferably from 0.01 to 1.5, more preferably from 0.03 to 1.2, and even more preferably from 0.05 to 1.0.

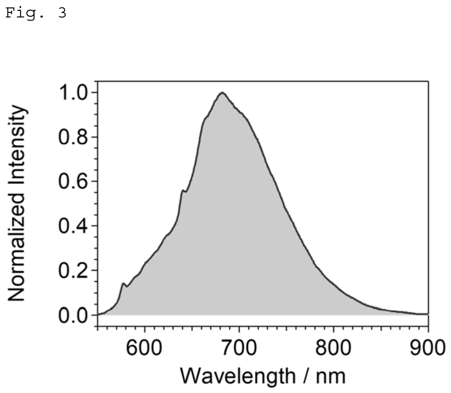

As the Raman spectroscopy method for the nanodiamond particles, Literature (e.g. Vadym N. Mochalin et al., NATURE NANOTECHNOLOGY, 7 (2012) 11-23, especially Figure 3) can be used as a reference.

In another preferred embodiment of the present invention, the surface of the nanodiamond particles obtained by the production method according to an embodiment of the present invention may have at least one oxygen functional group terminal and/or at least one hydrogen terminal. Examples of the oxygen functional group terminal include OH, COOH, $CONH_2$, C=O, and CHO, and OH, C=O, and COOH are preferred. Examples of the hydrogen terminal include alkyl groups having from 1 to 20 carbons.

Presence of at least one type of the oxygen functional group terminals on the surfaces of the nanodiamond particles obtained by the production method according to an embodiment of the present invention is preferred because aggregation of the nanodiamond particles can be suppressed. Presence of at least one type of the hydrogen terminals on the surfaces of the nanodiamond particle obtained by the production method according to an embodiment of the present invention is preferred because the zeta potential is positive, and stable and high dispersion occurs in an acidic aqueous solution.

In another preferred embodiment of the present invention, the nanodiamond particles obtained by the production method according to an embodiment of the present invention may have a core-shell structure. The core of the nanodiamond particles obtained by the production method according to an embodiment of the present invention having a core-shell structure is the nanodiamond particle doped with at least one type of heteroatom. This core is preferably a core having the heteroatom-V center and emitting fluorescence. The shell is a non-diamond cover layer, may contain a $sp^2$-carbon, and preferably further contains an oxygen atom. The shell may be a graphite layer. The thickness of the shell is preferably 5 nm or less, more preferably 3 nm or less, and even more preferably 1 nm or less. The shell may have a hydrophilic functional group on its surface.

The shape of the nanodiamond particles obtained by the production method according to an embodiment of the present invention is preferably spherical, ellipsoidal, or polyhedral close to these.

In the production method according to an embodiment of the present invention, mixing of the explosive and the heteroatom compound optionally blended therewith in a detonation method may be performed in the presence or absence of a solvent, and formation can be performed by pressing or casting after mixing.

The average particle sizes of the explosive and the heteroatom compound are preferably 10 mm or less, more preferably 5 mm or less, and even more preferably 1 mm or less. Note that these average particle sizes can be measured by laser diffraction/scattering methods, by an optical microscope, or by Raman method.

The product obtained by the explosion may be subjected to purification or post-treatment, such as gas phase oxidation treatment, high-temperature long-time mixed acid treatment with mixed acid, and further alkali treatment.

When the explosive composition containing the explosive and, as necessary, the heteroatom compound is exploded in a container, in addition to the nanodiamond, for example, graphite, metal impurities, the elemental heteroatom, and heteroatom oxides are generated. Graphite and metal impurities can be removed by the high-temperature long-time mixed acid treatment. In the case where the heteroatom is a Group 14 element, such as Si, Ge, Sn, or Pb, elemental Group 14 elements (Si, Ge, Sn, Pb) and Group 14 element oxides (e.g. $SiO_2$, $GeO_2$, SnO, $SnO_2$, PbO, $PbO_2$) can be removed by the alkali treatment. The metal impurities can hardly be removed or cannot be removed at all by a normal mixed acid treatment.

Examples of the alkali include alkali metal hydroxides, such as sodium hydroxide and potassium hydroxide. The temperature of the alkali treatment is from 30 to 150°C, and the duration of the alkali treatment is from 0.5 to 24 hours.

In one preferred embodiment of the present invention, nanodiamond particles having NV centers with high ODMR contrast can be obtained without performing vacancy formation by ion beam or electron beam irradiation and NV center formation by annealing in a vacuum or inert gas atmosphere, but the following post-treatment may be performed as necessary. The post-treatment can include annealing. The annealing treatment brings the doped nitrogen, heteroatom and vacancy in the nanodiamond into contact with each other, and thus the NV center and heteroatom-V center can be formed. Vacancy formation is optional and may be performed before annealing. The vacancy formation is performed by ion beam or electron beam irradiation. Even in the case where no vacancy formation is performed, the NV center and the heteroatom-V center are formed by the annealing; however, by performing the annealing after the vacancy formation, more NV centers and heteroatom-V centers can be formed. For the density of vacancies to be introduced by ion beam irradiation or electron beam irradiation, the upper limit is limited by a concentration at which the diamond is broken (a vacancy concentration of $> 1 \times 10^{21}$ /cm$^3$), but the lower limit is, for example, $1 \times 10^{16}$/cm$^3$ or higher, or even $1 \times 10^{18}$/cm$^3$ or higher. The ion beam is preferably a hydrogen (H) or helium (He) ion beam. For example, the energy of the ion beam of hydrogen is preferably from 10 to 1500 keV, and the energy of the ion beam of helium is preferably from 20 to 2000 keV. The energy of the electron beam is preferably from 500 to 5000 keV.

The temperature of the annealing is 650°C or higher, preferably 800°C or higher, and the annealing time is 30 minutes or longer.

The explosive is not particularly limited, and known explosives can be widely used. Specific examples thereof

**EP 4 699 981 A1**

include trinitrotoluene (TNT), cyclotrimethylene trinitramine (hexogen, RDX), cyclotetramethylene tetranitramine (octogen), trinitrophenyl methylnitramine (tetryl), pentaerythritol tetranitrate (PETN), tetranitromethane (TNM), triaminotrinitrobenzene, hexanitrostilbene, and diaminodinitrobenzofuroxan. One type of these can be used alone, or a combination of two or more types of these can be used.

The heteroatom compounds specifically exemplified below are mere examples, and publicly known heteroatom compounds can be widely used.

Examples of the organic silicon compound having silicon as the heteroatom include:

- silanes having a lower alkyl group, such as acetoxytrimethylsilane, diacetoxydimethylsilane, triacetoxymethylsilane, acetoxytriethylsilane, diacetoxydiethylsilane, triacetoxyethylsilane, acetoxytripropylsilane, methoxytrimethylsilane, dimethoxydimethylsilane, trimethoxymethylsilane, ethoxytrimethylsilane, diethoxydimethylsilane, triethoxymethylsilane, ethoxytriethylsilane, diethoxydiethylsilane, triethoxyethylsilane, and trimethylphenoxysilane;
- silanes having a halogen atom, such as trichloromethylsilane, dichlorodimethylsilane, chlorotrimethylsilane, trichloroethylsilane, dichlorodiethylsilane, chlorotriethylsilane, trichlorophenylsilane, dichlorodiphenylsilane, chlorotriphenylsilane, dichlorodiphenylsilane, dichloromethylphenylsilane, dichloroethylphenylsilane, chlorodifluoromethylsilane, dichlorofluoromethylsilane, chlorofluorodimethylsilane, chloroethyldifluorosilane, dichloroethylfluorosilane, chlorodifluoropropylsilane, dichlorofluoropropylsilane, trifluoromethylsilane, difluorodimethylsilane, fluorotrimethylsilane, ethyltrifluorosilane, diethyldifluorosilane, triethylfluorosilane, trifluoropropylsilane, fluorotripropylsilane, trifluorophenylsilane, difluorodiphenylsilane, fluorotriphenylsilane, tribromomethylsilane, dibromodimethylsilane, bromotrimethylsilane, bromotriethylsilane, bromotripropylsilane, dibromodiphenylsilane, and bromotriphenylsilane;
- polysilanes, such as hexamethyldisilane, hexaethyldisilane, hexapropyldisilane, hexaphenyldisilane, and octaphenylcyclotetrasilane;
- silazanes, such as triethylsilazane, tripropylsilazane, triphenylsilazane, hexamethyldisilazane, hexaethyldisilazane, hexaphenyldisilazane, hexamethylcyclotrisilazane, octamethylcyclotetrasilazane, hexaethylcyclotrisilazane, octaethylcyclotetrasilazane, and hexaphenylcyclotrisilazane;
- aromatic silanes having a silicon atom incorporated into an aromatic ring, such as silabenzene and disilabenzene;
- hydroxyl group-containing silanes, such as trimethylsilanol, dimethylphenylsilanol, triethylsilanol, diethylsilanediol, tripropylsilanol, dipropylsilanediol, triphenylsilanol, and diphenylsilanediol;
- alkyl- or aryl-substituted silanes, such as tetramethylsilane, ethyltrimethylsilane, trimethylpropylsilane, trimethylphenylsilane, diethyldimethylsilane, triethylmethylsilane, methyltriphenylsilane, tetraethylsilane, triethylphenylsilane, diethyldiphenylsilane, ethyltriphenylsilane, and tetraphenylsilane;
- carboxyl group-containing silanes, such as triphenylsilylcarboxylic acid, trimethylsilylacetic acid, trimethylsilylpropionic acid, and trimethylsilylbutyric acid;
- siloxanes, such as hexamethyldisiloxane, hexaethyldisiloxane, hexapropyldisiloxane, and hexaphenyldisiloxane;
- silanes having an alkyl or aryl group and a hydrogen atom, such as methylsilane, dimethylsilane, trimethylsilane, diethylsilane, triethylsilane, tripropylsilane, diphenylsilane, and triphenylsilane; and
- tetrakis(chloromethyl)silane, tetrakis(hydroxymethyl)silane, tetrakis(trimethylsilyl)silane, tetrakis(trimethylsilyl)methane, tetrakis(dimethylsilanolyl)silane, tetrakis(tri(hydroxymethyl)silyl)silane, and tetrakis(nitratemethyl)silane.

Examples of the inorganic silicon compound include silicon oxide, silicon oxynitride, silicon nitride, silicon oxycarbide, silicon nitrocarbide, silane, and carbon materials doped with silicon. Examples of the carbon material doped with silicon include plumbago, graphite, activated carbon, carbon black, Ketjen black, coke, soft carbon, hard carbon, acetylene black, carbon fiber, and mesoporous carbon.

Examples of the boron compounds include inorganic boron compounds and organic boron compounds.

Examples of the inorganic boron compound include orthoboric acid, diboron dioxide, diboron trioxide, tetraboron trioxide, tetraboron pentoxide, boron tribromide, tetrafluoroboric acid, ammonium borate, and magnesium borate.

Examples of the organic boron compound include triethylborane, (R)-5,5-diphenyl-2-methyl-3,4-propano-1,3,2-oxazaborolidine, triisopropyl borate, 2-isopropoxy-4,4,5,5-tetramethyl-1,3,2-dioxaborolane, bis(hexylene glycolato)diboron, 4-(4,4,5,5-tetramethyl-1,3,2-dioxaborolan-2-yl)-1H-pyrazole, tert-butyl-N-[4-(4,4,5,5-tetramethyl-1,2,3-dioxaborolan-2-yl)phenyl]carbamate, phenylboronic acid, 3-acetylphenylboronic acid, boron trifluoride-acetic acid complex, boron trifluoride-sulfolane complex, 2-thiopheneboronic acid, and tris(trimethylsilyl) borate.

Examples of the phosphorus compounds include inorganic phosphorus compounds and organic phosphorus compounds. Examples of the inorganic phosphorus compound include ammonium polyphosphate.

Examples of the organic phosphorus compound include phosphate esters such as trimethyl phosphate, triethyl phosphate, tripropyl phosphate, tributyl phosphate, tripentyl phosphate, trihexyl phosphate, dimethylethyl phosphate, methyldibutyl phosphate, ethyldipropyl phosphate, 2-ethylhexyldi(p-tolyl) phosphate, bis(2-ethylhexyl) p-tolyl phosphate, tritolyl phosphate, di(dodecyl) p-tolyl phosphate, tris(2-butoxyethyl) phosphate, tricyclohexyl phosphate, triphenyl phosphate, ethyldiphenyl phosphate, dibutylphenyl phosphate, phenylbisdodecyl phosphate, cresyldiphenyl phosphate, tricresyl phosphate, p-tolylbis(2,5,5'-trimethylhexyl) phosphate, cresyl-2, 6-xylenyl phosphate, trixylenyl phosphate, hydroxyphenyldiphenyl phosphate, tris(t-butylphenyl) phosphate, tris(i-propylphenyl) phosphate, 2-ethylhexyl diphenyl phosphate, bis(2-ethylhexyl) phenyl phosphate, tri(nonylphenyl) phosphate, and phenylbisneopentyl phosphate;

Condensed phosphoric acid esters such as 1, 3-phenylene bis(diphenyl phosphate), 1, 4-phenylene bis(dixylenyl phosphate), 1, 3-phenylene bis(3,5,5'-trimethylhexyl phosphate), bisphenol A bis(diphenyl phosphate), 4,4'-biphenyl bis(dixylenyl phosphate), and 1,3,5-phenylene tris(dixylenyl phosphate);
phosphite esters such as trimethyl phosphite, triethyl phosphite, triphenyl phosphite, and tricresyl phosphite;
phosphite esters such as 1, 3-phenylene bis(diphenyl phosphite), 1, 3-phenylene bis(dixyrenyl phosphite), 1, 4-phenylene bis(3,5,5'-trimethylhexyl phosphite), bisphenol-A bis(diphenyl phosphite), 4,4'-biphenyl bis(dixyrenyl phosphite), and 1,3,5-phenylene tris(dixyrenyl phosphite).

Examples of the germanium compound include organic germanium compounds, such as methylgermane, ethylgermane, trimethylgermanium methoxide, dimethylgermanium diacetate, tributylgermanium acetate, tetramethoxygermanium, tetraethoxygermanium, isobutylgermane, alkylgermanium trichloride, and dimethylaminogermanium trichloride, germanium complexes, such as nitrotriphenol complex ($Ge_2(ntp)_2O$), catechol complex ($Ge(cat)_2$) or aminopyrene complex ($Ge_2(ap)_2Cl_2$, and germanium alkoxide, such as germanium ethoxide and germanium tetrabutoxide.

Examples of the tin compound include inorganic tin compounds, such as tin(II) oxide, tin(IV) oxide, tin(II) sulfide, tin(IV) sulfide, tin(II) chloride, tin(IV) chloride, tin(II) bromide, tin(II) fluoride, tin acetate, and tin sulfate; alkyl tin compounds, such as tetramethyltin; monoalkyltin oxide compounds, such as monobutyltin oxide; dialkyltin oxide compounds, such as dibutyltin oxide; aryltin compounds, such as tetraphenyltin; and organic tin compounds, such as dimethyltin maleate, hydroxybutyltin oxide, and monobutyltin tris(2-ethylhexanoate).

Examples of the lead compound include inorganic lead compounds, such as lead monoxide (PbO), lead dioxide ($PbO_2$), minium ($Pb_3O_4$), white lead ($2PbCO_3$-$Pb(OH)_2$), lead nitrate ($Pb(NO_3)_2$), lead chloride ($PbCl_2$), lead sulfide (PbS), chrome yellow ($PbCrO_4$, $Pb(SCr)O_4$, PbO $PbCrO_4$), lead carbonate ($PbCO_3$), lead sulfate ($PbSO_4$), lead fluoride ($PbF_2$), lead tetrafluoride ($PbF_4$), lead bromide ($PbBr_2$), and lead iodide ($PbI_2$); and organic lead compounds, such as lead acetate ($Pb(CH_3COO)_2$), lead tetracarboxylate ($Pb(OCOCH_3)_4$), tetraethyllead ($Pb(CH_3CH_2)_4$), tetramethyllead ($Pb(CH_3)_4$), and tetrabutyllead ($Pb(C_4H_9)_4$).

One type of the heteroatom compound may be used alone, or two or more types of the heteroatom compounds may be used in combination.

The proportion of the explosive in the mixture containing the explosive and the heteroatom compound is preferably from 80 to 99.9999 mass%, more preferably from 85 to 99.999 mass%, even more preferably from 90 to 99.99 mass%, and particularly preferably from 95 to 99.9 mass%. The proportion of the heteroatom compound is preferably from 0.0001 to 20 mass%, more preferably from 0.001 to 15 mass%, even more preferably from 0.01 to 10 mass%, and particularly preferably from 0.1 to 5 mass%. Furthermore, the heteroatom content in the mixture containing the explosive and the heteroatom compound is preferably from 0.000005 to 10 mass%, more preferably from 0.00001 to 8 mass%, even more preferably from 0.0001 to 5 mass%, particularly preferably from 0.001 to 3 mass%, and most preferably from 0.01 to 1 mass%.

Mixing of the explosive and the heteroatom compound may be performed by powder mixing in the case where these are solids, by melting, or by mixing through dissolving or dispersing them in an appropriate solvent. They can be mixed by agitation, bead milling, an ultrasonic wave, or the like.

In one preferred embodiment, the explosive composition containing the explosive and the heteroatom compound further contains a cooling medium. The cooling medium may be any of a solid, a liquid, or a gas. Examples of the method of using the cooling medium include a method of detonating the mixture of the explosive and the heteroatom compound in the cooling medium. Examples of the cooling medium include inert gases (nitrogen, argon, and CO), water, ice, liquid nitrogen, aqueous solutions of heteroatom-containing salts, and crystalline hydrates. Examples of the heteroatom-containing salt include ammonium hexafluorosilicate, ammonium silicate, and tetramethylammonium silicate. When the cooling medium is, for example, water or ice, it is preferable to use the cooling medium in an amount of about 5 times the weight of the explosive.

In one preferred embodiment of the present invention, the mixture containing the explosive and, as necessary, the heteroatom compound is transformed into diamonds through compression by shock wave under high pressure and high temperature conditions generated by explosion of the explosive (detonation method). At the time of explosion of the explosive, nitrogen and, as necessary, the heteroatom is incorporated into the diamond lattice. The carbon source of the nanodiamonds can be the explosive and the organic heteroatom compound; however, in the case where the mixture containing the explosive and the heteroatom compound further contains a carbon material that contains no heteroatom, this carbon material may be the carbon source of the nanodiamonds. The nitrogen source of the NV center may be the nitro group of the explosive.

Examples

Hereinafter, the present invention will be described more specifically with reference to Examples, but the present invention is not limited by these Examples.

Example 1

Nanodiamonds were produced in accordance with a typical method for producing nanodiamonds by a detonation method, using 1 kg of an explosive containing 60% of trinitrotoluene (TNT) and 40% of cyclotrimethylene trinitramine (RDX). The nanodiamonds thus obtained were subjected to the following treatments.

(i) Purifying treatment

The nanodiamonds 15g obtained in the detonation synthesis were added to a mixed acid 2800 g of concentrated sulfuric acid and concentrated nitric acid in a weight ratio of 11:1, and the resulting mixture was treated at 150°C for 10 hours with stirring to purify the nanodiamonds. Next, the precipitation solution (the solution containing cluster nanodiamonds) obtained through the treatment of washing with water was subjected to drying to obtain a nanodiamond powder.

(ii) Gas Phase Oxidation Treatment

The powder obtained in (i) was subjected to oxidation treatment in a gas atmosphere furnace at 570°C in a 4% oxygen atmosphere for 1 hour to obtain a nanodiamond powder. The yield after the oxidation treatment at 570°C was 17.5%.

(iii) High-Temperature Long-Time Mixed Acid Treatment

The nanodiamond powder obtained in the gas phase oxidation treatment (ii) was added to a mixed acid of concentrated sulfuric acid and concentrated nitric acid in a weight ratio of 3:1, and the mixed acid treatment was performed at 130°C for 72 hours. The nanodiamond treated with the mixed acid was recovered by centrifugation and repeatedly washed with pure water. The nanodiamond recovered after washing was subjected to drying to obtain a nanodiamond powder.

Example 2

Using approximately 1 kg of an explosive composition obtained by adding 1 parts by mass of triphenylsilanol as a heteroatom compound into 100 parts by mass of explosive containing trinitrotoluene (TNT) and cyclotrimethylene trinitramine (RDX), silicon-doped nanodiamonds were produced in accordance with an ordinary method for nanodiamond production. The silicon-doped nanodiamond obtained was subjected to the following treatment. Note that the added amount of triphenylsilanol in the explosive was 1 mass%.

(I) Mixed Acid Treatment The nanodiamonds 15g obtained in the detonation synthesis were added to a mixed acid 2800 g of concentrated sulfuric acid and concentrated nitric acid in a weight ratio of 11:1, and the mixture was treated at 150°C for 10 hours with stirring.

(II) Alkali Treatment In 100 mL of an 8 N sodium hydroxide aqueous solution, 1 g of the nanodiamonds that had been treated with the mixed acid was added and treated at 70°C for 8 hours while being agitated. The obtained Si-doped nanodiamond raw material was subjected to a gas phase oxidation treatment in a gas atmosphere furnace at 570°C in a 4% oxygen atmosphere for 2 hours to obtain Si-doped nanodiamond particles according to an embodiment of the present invention. The yield after gas phase oxidation treatment at 570°C was 4.6%.

(III) Gas Phase Oxidation Treatment
The powder obtained in (I) was subjected to oxidation treatment in a gas atmosphere furnace at 570°C in a 4% oxygen atmosphere for 1 hour to obtain a nanodiamond powder. The yield after the oxidation treatment at 570°C was 17.5%.

(IV) High-Temperature Long-Time Mixed Acid Treatment
The nanodiamond powder obtained in the gas phase oxidation treatment (III) was added to a mixed acid of concentrated sulfuric acid and concentrated nitric acid in a weight ratio of 3:1, and the mixed acid treatment was performed at 130°C for 72 hours. The nanodiamond treated with the mixed acid was recovered by centrifugation and repeatedly washed with pure water. The nanodiamond recovered after washing was subjected to drying to obtain a nanodiamond powder.

Example 3

The fluorescence mapping, fluorescence spectrum and ODMR (optically detected magnetic resonance) of the nanodiamond particles obtained in Example 1 or 2 were measured using the confocal microscope of FIG. 1.

The nanodiamond powder obtained by the high-temperature long-time mixed acid treatment (iii) in Example 1 was added to pure water, and the mixture was subjected to ultrasonic treatment for 10 minutes to prepare a nanodiamond aqueous dispersion having a concentration of 0.03 mg / mL. The dispersion 5 μL was dropped on a cover glass and naturally dried. Thereafter, a thin copper wire having a diameter of 30 μm was attached to the surface of the cover glass (for applying microwaves). After the thin copper wire was stretched, the measurement set was assembled in a form of being sandwiched by another cover glass. The measurement set was fixed on the objective lens of the confocal microscope (FIG. 1), a microwave generator was connected to the thin copper wire, and fluorescence mapping, fluorescence spectrum, and ODMR were measured.

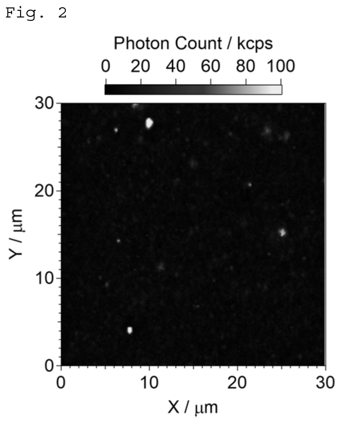

For fluorescence mapping measurements, the excitation light was focused on the nanodiamond layer after the measurement set was fixed on an oil immersion objective lens. The fluorescence emitted from the nanodiamond was collected by the same oil immersion objective lens, passed through a pinhole and a long-pass filter, and collected on a detector for measurement. The objective lens mounted on the piezo stage was moved (movable range in the plane direction: 100 μm square, movable range in the optical axis direction: 25 μm), and fluorescence mapping measurement was performed by high-speed mapping (FIG. 2). An avalanche photodiode (APD) was used as a detector. The measurement conditions were as follows: excitation light wavelength: 532nm, excitation light power: 100 μW, pixel number: 200 × 200 pixels, exposure time: 3 ms / pixel, number of integrations: 1, measuring range: 30 × 30 μm, and the measuring was performed in a state where a neutral density filter (optical density: 1.0) was attached before APD.

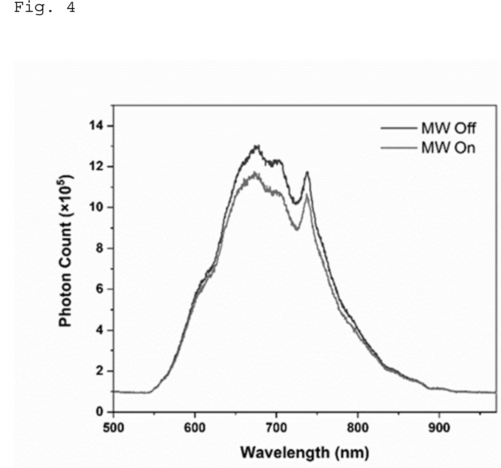

In the fluorescence spectrum measurement, a plurality of bright spots were confirmed as a result of the fluorescence mapping measurement. The fluorescence spectrum of the nanodiamond particles obtained in Example 1 was measured with the position of the focused excitation light adjusted to one bright spot (FIG. 3) (excitation light wavelength: 532 nm, excitation light power: 100 μW, exposure time: 0.1 s, number of integrations: 100). A fluorescence spectrum was obtained using a spectroscope and a CCD camera. Further, a fluorescence spectrum was obtained in the same manner as described above for the Si-doped nanodiamond particles obtained in Example 2 (FIG. 4).

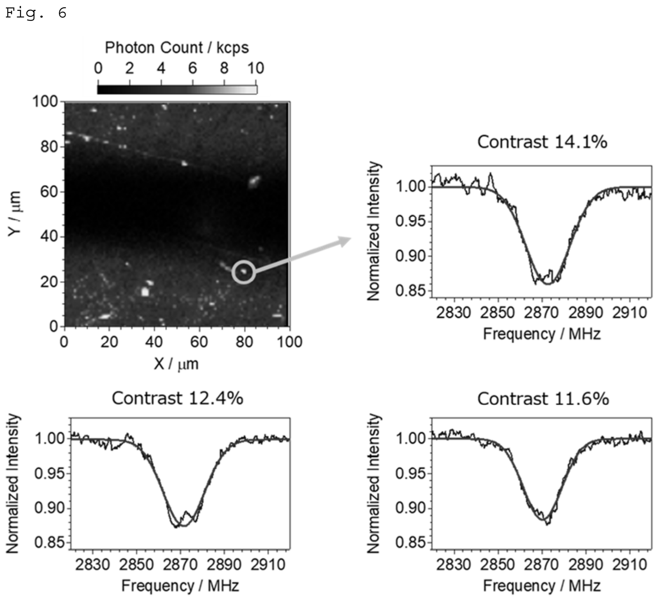

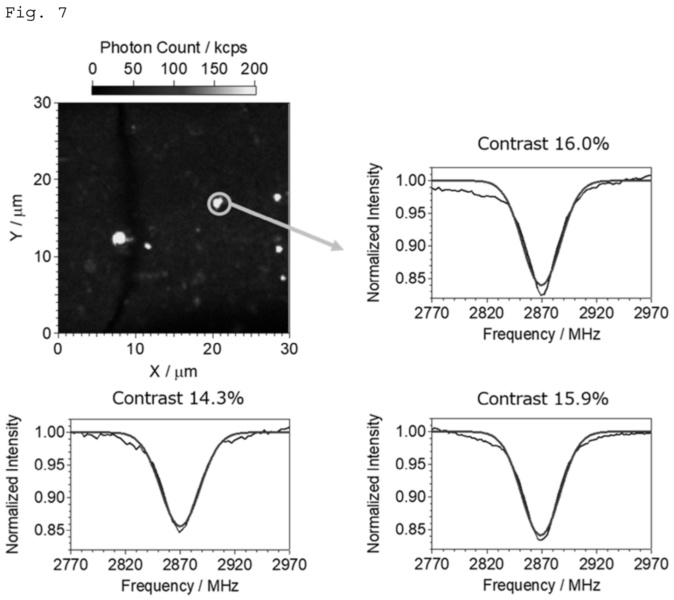

In the ODMR measurement, excitation light was focused on one bright spot, and the fluorescence intensity emitted from the nanodiamond particles obtained in Example 1 or Example 2 was confirmed. After the fluorescence intensity was confirmed, the output of the microwave generator was turned on, the stretched thin copper wire was energized, the frequency of the microwave was swept, and the ODMR spectrum was measured (Table 1, FIG. 6, FIG. 7). An APD was used as a detector. The measurement conditions were as follows: microwave frequency (MW Frequency / MHz) sweep range: 2820 to 2920 MHz, microwave power: 25 dBm (estimated after amplification by an amplifier), excitation light wavelength: 532 nm, excitation light power: 100 μW, and number of integrations: 10.

Example 4

Rabi Oscillation (Rabi) Measurement

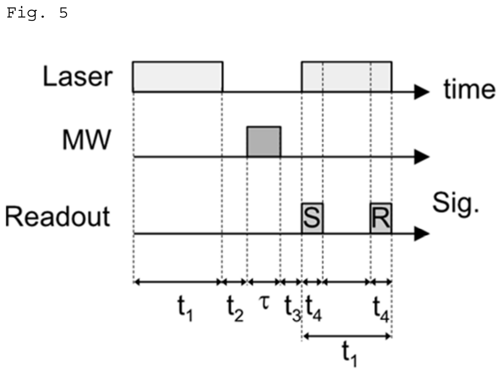

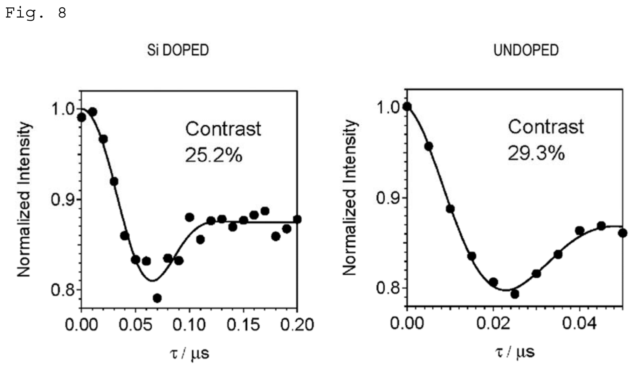

After the resonance frequency of the NV center was determined from the ODMR spectrum of the nanodiamond particles obtained in Example 1 or Example 2, the frequency of the microwave generator was set to coincide with the resonance frequency of the NV center. Thereafter, the measurement sequence shown in FIG. 5 was assembled. First, a laser beam was irradiated to initialize the spin state of the NV center, and after a predetermined time, a microwave was irradiated to change the spin state. Since the emission intensity of the NV center changes according to the spin state, the laser is irradiated again and the emission intensity is read by the detector. However, since the spin state is initialized when the laser is continuously applied, the emission intensity is read only for a certain initial time after the laser is applied. This is referred to as Signal (S). On the other hand, in a time domain in which the spin state is initialized by continuing to apply the laser sufficiently, the emission intensity is detected for the same time as S. This is referred to as Reference (R). In the Rabi oscillation, by plotting the value of Signal/Reference while changing the time $\tau$ for applying the microwave, oscillation corresponding to $\tau$ is observed, and this becomes the Rabi oscillation. The measurement conditions were as follows: excitation light wavelength: 532 nm, excitation light power: 100 μW, and set frequency: 2870 MHz (determined from the ODMR spectrum). In FIG. 5, $t_1$ = 20000 ns, $t_2$ = 1000 ns, $t_3$ = 100 ns, and $t_4$ = 600 ns. $\tau$ was typically measured from 0 ns in 10 ns increments. Signal/Reference (intensity) was plotted against $\tau$, and fitting was performed using the fitting function shown in Formula 1. Each parameter was determined by fitting, and the value of 2 × b was taken as the contrast in Rabi oscillation (FIG. 8, Table 2).

[Formula 4]

$$f(\tau) = a + b \exp\left[-\left(\frac{\tau}{tau_1}\right)^n\right] \cos\left(\frac{2\pi\tau}{tau_1} + \varphi\right) \quad \text{FORMULA 1 (a + b = 1)} \qquad \text{(FORMULA 1)}$$

[Table 1]

ODMR measurement results

| Sample | Number of bright spots | ODMR observation number | ODMR contrast | | | | | | |
|---|---|---|---|---|---|---|---|---|---|
| | | | >2% | >3% | >4% | >5% | >6% | >7% | >8% |
| Undoped ND | 100 | 50 | 49 | 44 | 39 | 33 | 29 | 25 | 19 |
| Proportion of the number of bright spots | | 100% | 98.0% | 88.0% | 78.0% | 66.0% | 58.0% | 50.0% | 38.0% |
| Si-doped ND | | 22 | 20 | 19 | 19 | 17 | 15 | 13 | 12 |
| Proportion of the number of bright spots | | 100% | 90.9% | 86.4% | 86.4% | 77.3% | 68.2% | 59.1% | 54.5% |

| Sample | ODMR contrast | | | | | | | Average contrast |
|---|---|---|---|---|---|---|---|---|
| | >9% | >10% | >11% | >12% | >13% | >14% | >15% | |
| Undoped ND | 13 | 9 | 5 | 3 | 1 | 1 | 0 | 6.98% |
| Proportion of the number of bright spots | 26.0% | 18.0% | 10.0% | 6.0% | 2.0% | 2.0% | 0.0% | |
| Si-doped ND | 8 | 8 | 7 | 5 | 4 | 4 | 2 | 8.48% |
| Proportion of the number of bright spots | 36.4% | 36.4% | 31.8% | 22.7% | 18.2% | 18.2% | 9.1% | |

[Table 2]

Measurement results of contrast in Rabi oscillation at a plurality of bright spots

| | Si-undoped | Si-doped | Commercial product (without high-temperature gas phase oxidation |
|---|---|---|---|
| Number of measurement points | 5 | 8 | 3 |
| Maximum value | 29.3% | 25.2% | 19.6% |
| Average | 23.9% | 16.6% | 14.9% |

Example 5

Si-doped nanodiamond particles (hereinafter abbreviated as "Si-DND") obtained by the same production method as in Example 2 were used to measure the spectrum of the NV⁻ center.

The average particle size of Si-DND used in Example 5 was 11.2 nm from the particle size distribution by a transmission electron microscope, and it was confirmed that the particle size was a particle size that can be expected to be introduced into the cell nucleus. The NV⁻ concentration in the Si-DND was estimated to be about 0.35 ppm from the electron spin resonance. This is a result that the NV⁻ concentration in the ND not subjected to electron beam irradiation or annealing treatment is three times or more higher than that in a known case. On the other hand, as a result of measuring ODMR for the light emitting spot (aggregate) of Si-DND, the contrast was 0.4% at the maximum. This is considered to be due to the influence of non-diamond carbon such as sp² remaining in the ND. As a result of performing hot mixed acid for 72 hours to remove these residues, a large number of NV⁻ having a contrast of 10% or more could be confirmed, and an ODMR signal was confirmed in about 50% of the measured DND light emitting spots.

The temperature of the Si-DND was measured using continuous wave optically detected magnetic resonance (CW-ODMR). First, a plurality of bright spots (Si-DND aggregates) having a light emission (PL) spectrum attributed to the NV center were confirmed using a confocal microscope, and measurement was performed on 10 bright spots among the bright spots. FIG. 9 shows data on one of the bright spots. FIG. 9a shows a PL spectrum, and ZPL (zero phonon line) of the NV⁻ center near 637 nm and ZPL of the NV⁰ center near 575 nm are confirmed. The temperature dependence of the ODMR spectrum was examined for such bright spots. The temperature of the sample was changed by a thermoplate in contact with the sample glass substrate and a lens heater on the objective lens side, and a value read by a temperature sensor (thermistor) attached in the immediate vicinity of the sample was defined as a sample temperature T. FIG. 9b shows the ODMR measured at 295 K and 313 K under a zero magnetic field (no external magnetic field applied), and the zero magnetic field splitting constant (D) shifts to the low frequency side with the temperature rise. The spectra were fitted with a double Lorentzian function, and the two centers of the two Lorentzian curves were averaged to obtain the D value. FIG. 9c shows the results of plotting the D value for different temperatures T. D varied linearly with T, and the rate of change dD/dT was fitted with a straight line to obtain a value of dD/dT = - 72.2 $\pm$ 1.3 kHz/K. The average value of dD/dT for the 10 different bright points was - 71.2 kHz/K, which was in close agreement with the dD/dT commonly reported for other diamonds.

Next, the temperature sensitivity was examined for 10 bright spots. The temperature sensitivity measurement was performed with reference to the method of the alternating magnetic field sensitivity measurement. The frequency position where the ODMR spectrum had the maximum slope with respect to microwave frequency was selected from the double Lorentz fitting and used to evaluate the temperature sensitivity. The emission intensity was traced while irradiating the microwave in accordance with the frequency position where the gradient was the steepest. The emission intensity was measured 100 times as the integration time tint required for one measurement of the emission intensity, and the standard deviation of the emission intensity was determined. The maximum slope of the frequency-intensity curve was then used to convert to the standard deviation of the microwave. Finally, the temperature was converted into a standard deviation of the temperature using dD/dT, and the standard deviation was defined as the uncertainty $\sigma_T$ of the temperature. As a result of measuring $\sigma_T$ while changing the integration time tint up to tint = 0.003 - 2 seconds, $\sigma_T$ was approximately decayed according to the following formula.

[Formula 5]

$$\eta_T / \sqrt{t_{\text{int}}}$$

This means that $\sigma_T$ is affected by shot noise only in this time domain. That is, when $N_{ph}$ is the number of detected photons, the following formula holds.

[Formula 6]

$$\sigma_T \propto 1/\sqrt{N_{\text{ph}}} \propto 1/\sqrt{t_{\text{int}}}$$

Here, $\eta_T$ represents temperature sensitivity, and corresponds to $\sigma_T$ at the unit integration time $t_{\text{int}}$ = 1 s. In the case of the bright spot in FIG. 9, the following formula was used in calculation.

[Formula 7]

$$\eta_T = 1.74 \ \pm 0.04 \, \text{K}/\sqrt{\text{Hz}}$$

In this measurement, however, a neutral density (ND) filter having an optical density (OD) of 1.0 was used before the avalanche photodiode (APD) to reduce the saturation of the APD, and the emission intensity was reduced to 1/10. If the ND filter is not used and the influence of the saturation of the APD can be ignored, the number of detected photons increases by 10 times, and thus $\eta_T$ is improved by $1/\sqrt{10}$. As a result, the temperature sensitivity at the bright spot was estimated by the following formula (FIG. 9(d)).

[Formula 8]

$$\eta_T = 0.55 \pm 0.01\,\mathrm{K}/\sqrt{\mathrm{Hz}}$$

Since the light emission of the bright spot is attributed to the contributions from a plurality of NV⁻, the following formula is applied to estimate the sensitivity of a single NV⁻.

[Formula 9]

$$\eta_{\mathrm{ensemble}} = \eta_{\mathrm{single}}/\sqrt{N}$$

Here, $\eta_{\mathrm{ensemble}}$ represents the sensitivity of the NV⁻ ensemble, $\eta_{\mathrm{single}}$ represents the sensitivity of a single NV⁻, and N represents the number of NV⁻ in a range observed at the confocal point. The number of NV⁻ was estimated from the emission intensity of a single NV⁻ in the bulk diamond measured with the same optical system. In the case of FIG. 9, it was estimated that 23 NV⁻ were included in the bright spots. From the above, the temperature sensitivity of a single NV⁻ was estimated by the following formula.

[Formula 10]

$$0.55 \times \sqrt{23} = 2.64 \pm 0.06\,\mathrm{K}/\sqrt{\mathrm{Hz}}$$

To investigate the spin properties of NV⁻, Rabi oscillations and spin-Hahn echo measurements were performed in the presence of an external magnetic field applied from a permanent magnet. This measurement result is shown in FIG. 9e and 9f. The spin coherence time ($T_2$) measured from the Hahn echo experiment was found to be 1.8 $\mu$s, consistent with the time commonly reported for DND.

The experimental procedure shown from FIG. 9b to 9d was repeated for 10 different bright spots. From the data obtained, the average temperature sensitivity was calculated by the following formula.

[Formula 11]

$$0.74\,\mathrm{K}/\sqrt{\mathrm{Hz}}$$

In addition, the average temperature sensitivity when converted to a single NV⁻ was determined by the following formula.

[Formula 12]

$$4.14\,\mathrm{K}/\sqrt{\mathrm{Hz}}$$

Among these measurements, the highest temperature sensitivity of the NV⁻ ensemble of Si-DND aggregates was determined by the following formula.

[Formula 13]

$$0.36 \pm 0.01\,\mathrm{K}/\sqrt{\mathrm{Hz}}$$

For a single NV⁻, the highest sensitivity observed was determined by the following formula.

[Formula 14]

$$2.64 \pm 0.06\,\mathrm{K}/\sqrt{\mathrm{Hz}}$$

Further, the results of temperature sensing by NV⁻ and SiV⁻ of the above Si-DND are shown in FIG. 10.
FIG. 11 illustrates an apparatus used for temperature sensing.

In FIG. 10a, the spots where both NV⁻ centers and SiV⁻ centers were observed in the confocal images of Si-DND aggregates are surrounded by white circles.

FIG. 10b shows a fluorescence spectrum of the spots in FIG. 10a. The zero phonon lines of NV⁻ (637 nm) and SiV⁻ (737 nm) are confirmed.

In addition, the ODMR spectrum of the NV⁻ center was measured at two temperatures of 295 K and 313 K (FIG. 10c). The ODMR contrast is improved as the measurement temperature increases.

FIG. 10d shows the temperature dependence of the zero magnetic field splitting constant (D) of the ODMR. The mean of the fitting of the two peaks with the double Lorentzian function was plotted, and the error bar was determined from the standard error of each. The peak sensitivity to temperature (dD/dT) was calculated to be - 84.4 $\pm$ 9.1 kHz/K.

The SiV⁻ ZPL spectra at two temperature levels, 300 K and 313 K, are shown in the FIG. 10e. At 300 K and 313 K, the relative intensity decreases with increasing temperature.

Further, the temperature dependence of the peak wavelengths of SiV⁻ ZPL is shown in the FIG. 10f. The peak wavelength $\lambda_p$ varied linearly with temperature, $\Delta\lambda_p / \Delta T = 0.014 \pm 0.002$ nm/K.

FIG. 10g shows a graph of the size distributions of Si-DND.

The simultaneous presence of NV⁻ centers and SiV⁻ centers within the same confocal measurement range may expand the versatility of NV⁻ centers for temperature sensing. The resonance frequency of the ODMR of NV⁻ (zero magnetic field splitting constant D) is affected by both temperature and electric field. In NV⁻, it is difficult to distinguish between a shift due to an electric field and a shift due to temperature. On the other hand, if temperature measurement using SiV⁻ can be performed at the same position, it can be expected that the influence of temperature and the influence of an electric field can be distinguished from each other by using both data of SiV⁻ and NV⁻. It is also noteworthy that the ODMR contrast increased with increasing temperature, which is inconsistent with the finding that ODMR contrast decreased with increasing temperature, but this increase in ODMR contrast is also believed to be due to the decrease in fluorescence intensity from SiV⁻ at high temperature, as shown in FIG. 10e, since the fluorescence of SiV⁻ is the background during ODMR measurements. As the temperature is increased, this background from SiV⁻ decreases, thereby increasing the relative fluorescence ratio of NV⁻ and consequently increasing the ODMR contrast. This phenomenon suggests that the use of a short-pass filter near the ZPL of SiV⁻ further improves the ODMR contrast, effectively reducing SiV⁻ fluorescence during ODMR measurements, and further increasing the sensitivity of the ODMR-based approach.

Temperature sensing using the ODMR characteristics of the NV⁻ center can improve temperature sensitivity with sub-Kelvin accuracy, and particularly, by realizing the temperature sensing with a nanodiamond having a size of 10 nm level, it is possible to perform very important measurement for measurement of living cells, such as identification of a difference in temperature distribution between the nucleus and the cytoplasm, and monitoring of a temperature change of mitochondria after activation (an increase of about 10 K at 20 nm). We also demonstrated multimodal temperature sensing using both NV⁻ and SiV⁻ in the same confocal volume, suggesting their high compatibility and the possibility for versatility of quantum sensing of DND doped with Group 14 elements such as GeV-DND, Sn-DND, Pb-DND.

**Claims**

1. A fluorescent nanodiamond particle emitting a fluorescence emission peak attributed to a nitrogen-vacancy (NV) center, the fluorescent nanodiamond particle satisfying condition (i) described below:

   (i) when a 1 mass% aqueous suspension of the particle is applied onto a glass substrate, a proportion of the number of bright spots exhibiting an ODMR contrast of 7% or more among bright spots in which ODMR of the NV center is observed is 10% or more.

2. The fluorescent nanodiamond particle according to claim 1, further satisfying condition (ii) and/or condition (iii) described below:

   (ii) an ODMR contrast is 12% or more;
   (iii) a maximum contrast in Rabi oscillation is 25% or more.

3. The fluorescent nanodiamond particle according to claim 1 or 2, further comprising a heteroatom-V center.

4. A method for producing the fluorescent nanodiamond described in any one of claims 1 to 3, the method comprising subjecting a nanodiamond raw material obtained by detonation to gas phase oxidation at a temperature of 560 to 620°C, and further to a high-temperature long-time mixed acid treatment at a temperature of 120 to 340°C for 36 to 120 hours.

5. The method for producing the fluorescent nanodiamond according to claim 4, wherein a post-treatment is not performed.

Fig. 1

Fig. 2

Fig. 3

Fig. 4

Fig. 5

Fig. 6

Fig. 7

Fig. 8

Fig. 9

Fig. 10

Fig. 11

## INTERNATIONAL SEARCH REPORT

| International application No. |
| --- |
| **PCT/JP2024/004227** |

| A. | CLASSIFICATION OF SUBJECT MATTER |
| --- | --- |

*C01B 32/28*(2017.01)i; *C09K 11/65*(2006.01)i
FI: C01B32/28; C09K11/65

According to International Patent Classification (IPC) or to both national classification and IPC

| B. | FIELDS SEARCHED |
| --- | --- |

Minimum documentation searched (classification system followed by classification symbols)

C01B32/28; C09K11/65

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII)

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2023/013659 A1 (DAICEL CORP.) 09 February 2023 (2023-02-09)<br>claims 1-12 | 1-5 |
| A | JP 2021-134127 A (DAICEL CORP.) 13 September 2021 (2021-09-13)<br>claims 1-3 | 1-5 |
| A | WO 2014/058012 A1 (JAPAN SCIENCE AND TECHNOLOGY AGENCY) 17 April 2014 (2014-04-17)<br>claims 1-14 | 1-5 |
| A | YANAGI, Tamami. Optimization of Wide-Field ODMR Measurements Using Fluorescent Nanodiamonds to Improve Temperature Determination Accuracy. Nanomaterials. 2020, vol. 10, 2282<br>Abstract | 1-5 |
| A | JP 2014-095025 A (OSAKA UNIVERSITY) 22 May 2014 (2014-05-22)<br>claims 1-8 | 1-5 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 April 2024** | **23 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/004227**

| Patent document cited in search report | | | Publication date (day/month/year) | Patent family member(s) | | | Publication date (day/month/year) |
|---|---|---|---|---|---|---|---|
| WO | 2023/013659 | A1 | 09 February 2023 | (Family: none) | | | |
| JP | 2021-134127 | A | 13 September 2021 | US claims 1-3 | 2021/0371740 | A1 | |
| WO | 2014/058012 | A1 | 17 April 2014 | US claims 1-16 | 2015/0276754 | A1 | |
| | | | | EP | 2907792 | A1 | |
| | | | | CN | 104870365 | A | |
| JP | 2014-095025 | A | 22 May 2014 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6117812 B

**Non-patent literature cited in the description**

- *Nanoscale Adv.*, 2022, vol. 4, 2268-2277
- **VADYM N. MOCHALIN et al.** *NATURE NANOTECHNOLOGY*, 2012, vol. 7, 11-23